# EUROPEAN PATENT APPLICATION

(11) **EP 4 715 976 A1**
(43) Date of publication of application: **25.03.2026**
(21) Application number: 25178684.4
(22) Date of filing: 26.05.2025
(51) Int. Cl.: H01M 50/15, H01M 50/188, H01M 50/148, H01M 50/174, H01M 50/207, H01M 50/528, H01M 50/531, H01M 50/586, H01M 50/593

(54) **SECONDARY BATTERY AND BATTERY PACK**

(30) Priority: 23.09.2024 KR 20240128279
(71) Applicant: SAMSUNG SDI CO., LTD., Yongin-si, Gyeonggi-do 17084 (KR)
(72) Inventor: Song, Da Seong, 16678 Suwon-si, Gyeonggi-do (KR); Lee, Eun Sung, 16678 Suwon-si, Gyeonggi-do (KR)
(74) Representative: Gulde & Partner

(57) **Abstract**

A secondary battery, including a case, an electrode assembly accommodated in the case, a cap assembly coupled to the case to seal the case, an insulator between the electrode assembly and the cap assembly, and a fixing member fixing the insulator to the electrode assembly, wherein the fixing member is in contact with the insulator, and wherein a first surface of the electrode assembly and a second surface of the electrode assembly are opposite each other.

## Description

### BACKGROUND

### 1. Field

The present disclosure relates to a secondary battery and a battery pack.

### 2. Description of the Related Art

In general, with the rapid spread of electronic devices that use batteries, such as portable phones, laptop computers, and electric vehicles, the demand for high energy density and high-capacity secondary batteries is rapidly increasing. Accordingly, research and development to improve the performance of lithium secondary batteries is actively being conducted.

A lithium secondary battery is a battery that includes a positive electrode and a negative electrode including active materials capable of intercalation and deintercalation of lithium ions, and electrolyte, and produces electrical energy through oxidation and reduction reactions when lithium ions are intercalated/deintercalated into/from the positive electrode and negative electrode.

The above-described information disclosed in the technology that forms the background of the present disclosure is only intended to improve understanding of the background of the present disclosure, and thus may include information that does not constitute the related art.

### SUMMARY

The invention is defined by the appended claims. The description that follows is subjected to this limitation. Any disclosure lying outside the scope of said claims is only intended for illustrative as well as comparative purposes.

Embodiments include a secondary battery, including a case, an electrode assembly accommodated in the case, a cap assembly coupled to the case to seal the case, an insulator between the electrode assembly and the cap assembly, and a fixing member fixing the insulator to the electrode assembly, wherein the fixing member is in contact with the insulator, and wherein a first surface of the electrode assembly and a second surface of the electrode assembly are opposite each other.

The fixing member may include a first portion in contact with the insulator, a second portion extending from the first portion, the second portion being in contact with the first surface, and a third portion may extend from the first portion, the third portion being in contact with the second surface.

The first portion may be parallel to a first direction, and the second portion and the third portion may be parallel to a second direction intersecting the first direction.

The fixing member may include a first fixing member, and a second fixing member spaced apart from the first fixing member in a direction parallel to a third direction intersecting the first direction and the second direction.

The insulator may include a frame, and a perforated plate covering a portion of an opening in the frame, the perforated plate facing the first portion.

The first portion may include a through hole.

The frame may include a center frame having the opening, and a sub-frame extending from the center frame, the sub-frame having the perforated plate.

The sub-frame may include a first sub-frame, and a second sub-frame having a lower height than the first sub-frame parallel to the second direction.

The first portion may contact the second sub-frame.

The second sub-frame may be spaced apart from the cap assembly.

The sub-frame may include a sub-frame body, a first sub-frame extension extending from the sub-frame body, and a second sub-frame extension extending from the sub-frame body, the second sub-frame extension being spaced apart from the first sub-frame extension in a direction parallel to the second direction.

The first portion may be between the first sub-frame extension and the second sub-frame extension, the first portion being in contact with the first sub-frame extension.

The second sub-frame extension may contact the cap assembly.

The perforated plate may include a first perforated plate, and a second perforated plate spaced apart from the first perforated plate in a direction parallel to the third direction.

The first fixing member may cover the first perforated plate, wherein the second fixing member may cover the second perforated plate.

The secondary battery may further include a connection member between the electrode assembly and the cap assembly, the connection member being connected to the electrode assembly and the cap assembly.

The connection member may include a current collector plate in contact with the electrode assembly, and a current collector may be in contact with the cap assembly.

The insulator may include an insulator body, a through hole passing through the insulator body and through which the current collector passes, and a receiving groove portion, which is a recess of the insulator body, the receiving groove portion accommodating the current collector plate therein.

The fixing member may include an adhesive tape.

Embodiments include a battery pack, including a housing, and a plurality of secondary batteries disposed inside the housing, wherein the secondary battery includes a case, an electrode assembly accommodated in the case, a cap assembly coupled to the case to cover an opening of the case, an insulator between the electrode assembly and the cap assembly, and a fixing member fixing the insulator to the electrode assembly, wherein the fixing member is in contact with the insulator, and wherein a first surface of the electrode assembly and a second surface of the electrode assembly are opposite each other.

These and other aspects and features of the present disclosure will be described in or will be apparent from the following description of some embodiments of the present disclosure.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery pack according to one or more embodiments of the present disclosure;
FIG. 2 is a perspective view schematically illustrating a configuration of a secondary battery according to one or more embodiments of the present disclosure;
FIG. 3 is an exploded perspective view schematically illustrating a configuration of a secondary battery according to one or more embodiments of the present disclosure;
FIG. 4 is an exploded perspective view schematically illustrating a configuration of an electrode assembly according to one or more embodiments of the present disclosure;
FIG. 5 is a view of a first side of a secondary battery according to a first embodiment of the present disclosure in a first direction;
FIG. 6 is a view of the secondary battery according to the first embodiment of the present disclosure in a second direction;
FIG. 7 is a view of the secondary battery according to the first embodiment of the present disclosure in a third direction;
FIG. 8 is a view of the first side of a secondary battery according to the first embodiment of the present disclosure in a first direction;
FIG. 9 is a view of the secondary battery according to the first embodiment of the present disclosure in a direction opposite to the second direction;
FIG. 10 is a view of the first side of the secondary battery according to the first embodiment of the present disclosure in the first direction;
FIG. 11 is a view of a first side of a secondary battery according to a second embodiment of the present disclosure in a first direction; and
FIG. 12 is a view of a first side of a secondary battery according to a third embodiment of the present disclosure in a first direction.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

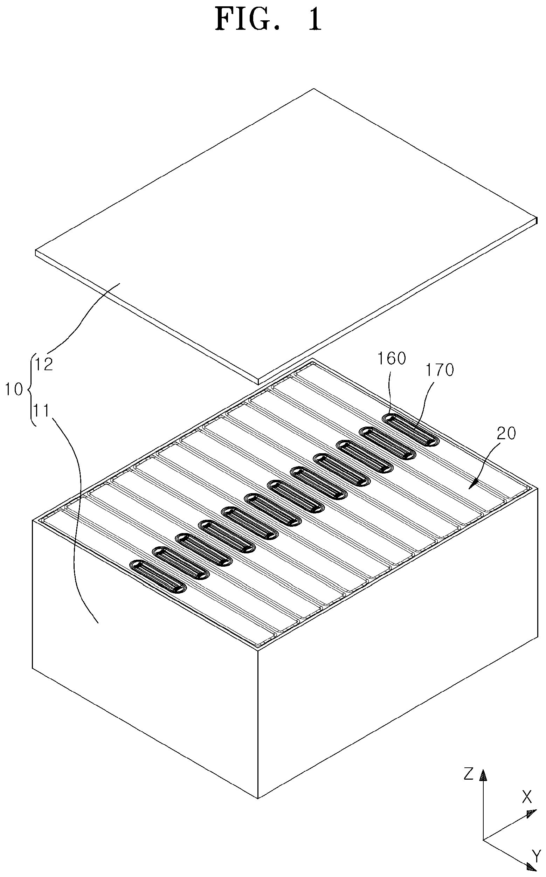

FIG. 1 is a perspective view schematically illustrating a configuration of a battery pack according to one or more embodiments of the present disclosure.

Referring to FIG. 1, the battery pack according to the present embodiment may include a housing 10 and a secondary battery 20.

The housing 10 may form the approximate exterior of the battery pack and provide a space in which the secondary battery 20 may be accommodated. The housing 10 may include a housing body 11 and a cover 12.

The housing body 11 may be formed in the form of a hollow box with one open side. A cross-sectional shape of the housing body 11 may be designed to have any of various shapes such as a polygon, a circle, and an oval.

The cover 12 is coupled to the housing body 11 and may close the internal space of the housing body 11. For example, the cover 12 may be formed to have substantially a plate shape and may be disposed to face the open side of the housing body 11.

The cover 12 may be fixed to the housing body 11 by any of various types of coupling methods such as bolting, welding, fitting, and the like.

The secondary battery 20 may function as a unit structure that stores and supplies power in the battery pack.

The secondary battery 20 may be disposed inside the housing 10. A plurality of secondary batteries 20 may be provided.

The plurality of secondary batteries 20 may be disposed in one, two or more rows in at least one of a longitudinal direction of the housing 10 (a direction parallel to an X-axis as shown in FIG. 1) and a width direction of the housing 10 (a direction parallel to a Y-axis as shown in FIG. 1).

In FIG. 1, an example in which the plurality of secondary batteries 20 are arranged in one row in the longitudinal direction of the housing 10 is illustrated, but may be designed in any of various forms with two or more rows.

The plurality of secondary batteries 20 may be disposed parallel to each other. The number of secondary batteries 20 may be designed in any of various ways depending on the size and shape of the housing 10.

A plurality of secondary batteries 20 may be electrically connected to each other. For example, neighboring secondary batteries 20 may be connected in series or in parallel by a busbar.

The busbar may be formed of an electrically conductive material such as copper, aluminum, or nickel. A specific shape of the busbar may be designed to have any of various shapes that may electrically connect the neighboring secondary battery 20.

Hereinafter, the secondary battery 20 according to one or more embodiments of the present disclosure will be described.

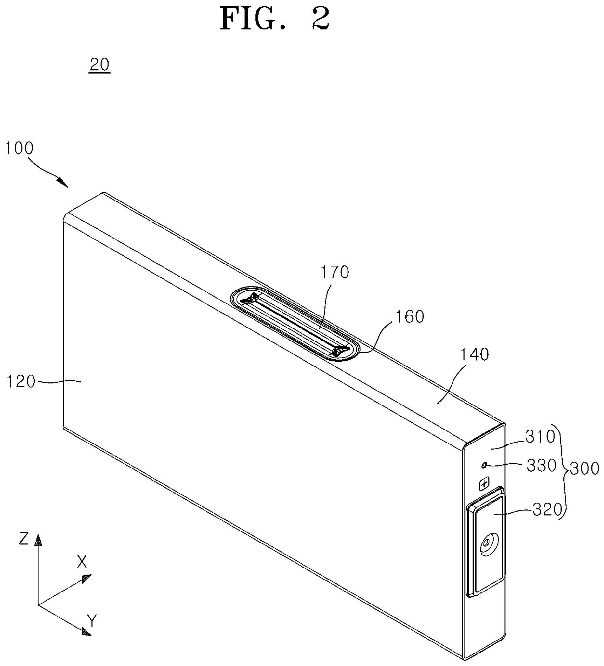

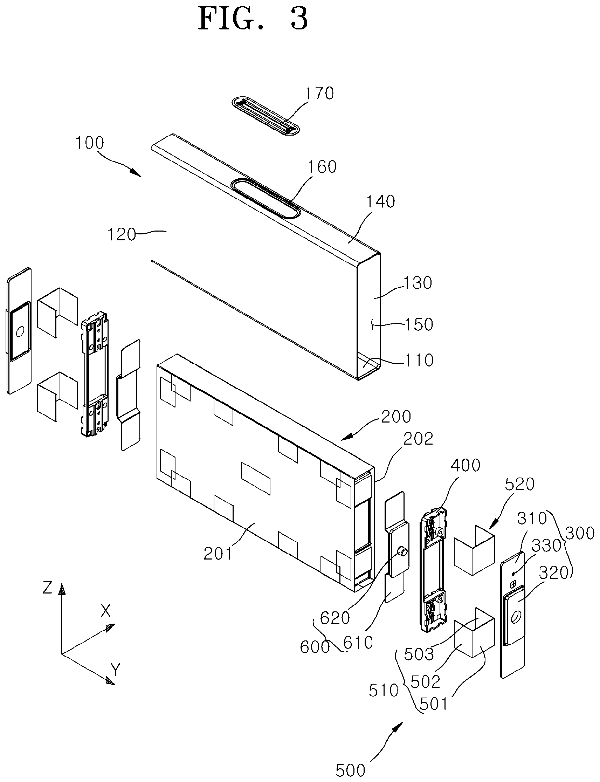

FIG. 2 is a perspective view schematically illustrating a configuration of a secondary battery according to one or more embodiments of the present disclosure, and FIG. 3 is an exploded perspective view schematically illustrating the secondary battery of FIG. 2.

A first direction described below may be a direction parallel to the X-axis based on FIG. 2, a second direction may be a direction parallel to the Y-axis based on FIG. 2, and a third direction may be a direction parallel to the Z-axis based on FIG. 2.

Hereinafter, an example in which the secondary battery 20 is a prismatic battery as a lithium ion secondary battery will be described. However, the secondary battery 20 may be a lithium polymer battery or a cylindrical battery.

Referring to FIGS. 2 and 3, the secondary battery 20 according to the present embodiment may include a case 100, an electrode assembly 200, a cap assembly 300, an insulator 400, and a fixing member 500.

The case 100 forms the approximate exterior of the secondary battery 20 and may accommodate the electrode assembly 200. The case 100 may include a bottom 110, a front surface 120, a rear surface 130, and a ceiling 140.

The bottom 110 may form a lower exterior of the case 100 (see FIG. 3). The bottom 110 may have a rectangular plate shape. The bottom 110 may be placed on a bottom surface of the housing body 11 (see FIG. 1).

The front surface 120 and the rear surface 130 may have the form of plates extending upward from edges of the bottom 110 (see FIG. 3). The front surface 120 and the rear surface 130 may be disposed to form a rectangular cross-sectional shape.

The front surface 120 and the rear surface 130 may be disposed to face each other in the longitudinal direction of the housing 10. The front surface 120 and the rear surface 130 may be disposed parallel to each other. The front surface 120 and the rear surface 130 may have the same area.

The ceiling 140 may form an upper exterior of the case 100 (see FIG. 3). The ceiling 140 may have a rectangular plate shape. The ceiling 140 may be disposed to face the cover 12.

The bottom 110 and the ceiling 140 may be disposed to face each other in a height direction (e.g., the Z-axis direction) of the housing 10. The bottom 110 and the ceiling 140 may be disposed parallel to each other. The bottom 110 and the ceiling 140 may have the same area. The bottom 110 and the ceiling 140 may have a smaller area than the front surface 120 and the rear surface 130.

The case 100 may further include an opening 150. The opening 150 may be formed to pass through the case 100 in a direction parallel to the second direction. The opening 150 may interconnect the space inside and outside the case 100.

Accordingly, the case 100 according to the present embodiment may have the form of a hollow rectangular parallelepiped provided with an internal space and two open sides.

The first direction described below may be a direction that is parallel to the X-axis based on FIG. 3 and a direction from the front surface 120 of the case 100 toward the rear surface 130. The second direction may be a direction that is parallel to the Y-axis based on FIG. 3 and a direction from one side opening 150 to the other side opening 150 of the case 100. The third direction may be a direction that is parallel to the Z-axis based on FIG. 3 and a direction from the bottom 110 toward the ceiling 140.

The electrode assembly 200 may function as a unit structure that performs charging and discharging operations of power in the secondary battery 20. The electrode assembly 200 may be accommodated inside the case 100.

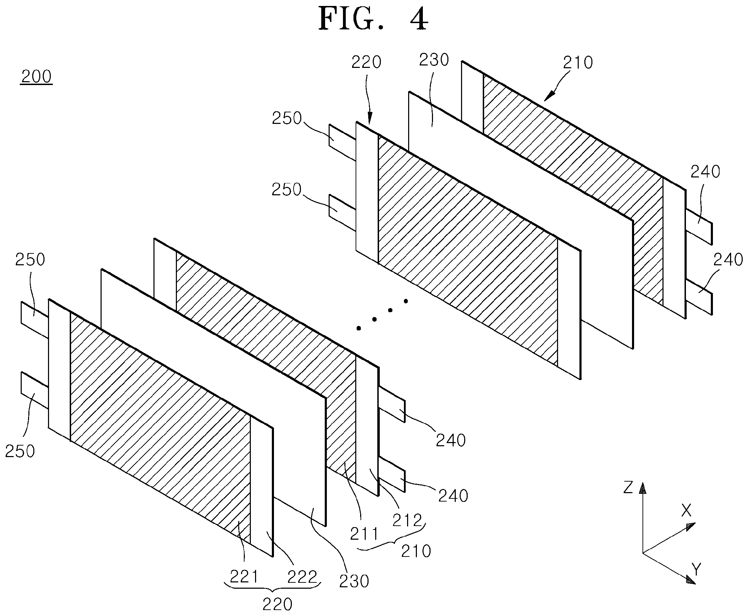

FIG. 4 is an exploded perspective view schematically illustrating a configuration of an electrode assembly according to one or more embodiments of the present disclosure.

Referring to FIGS. 2 to 4, the electrode assembly 200 according to the present embodiment may include a positive electrode plate 210, a negative electrode plate 220, a separator 230, a positive electrode tab 240, and a negative electrode tab 250.

The positive electrode plate 210 may function as a positive electrode of the electrode assembly 200. The positive electrode plate 210 may be formed in the form of a foil including a metal material such as aluminum or an aluminum alloy.

A type, size, and shape of the positive electrode plate 210 may be varied, as long as the positive electrode plate 210 has conductivity and does not cause a chemical change in the secondary battery 20. The shape of the positive electrode plate 210 may be designed to have any of various shapes other than the rectangle illustrated in FIG. 4.

A plurality of positive electrode plates 210 may be provided. The plurality of positive electrode plates 210 may be arranged in a direction parallel to the first direction, that is, in the first direction or in a direction opposite to the first direction, between the front surface 120 and the rear surface 130 of the case 100. The number of positive electrode plates 210 may be designed to vary depending on the charging capacity or the like of the secondary battery 20.

The positive electrode plate 210 may include a first active material layer 211 and a first uncoated portion 212.

The first active material layer 211 may be provided in a form in which at least a portion of the positive electrode plate 210 is coated with the first active material layer. Both surfaces of the positive electrode plate 210 may be coated with the first active material layer 211, or only one surface of the positive electrode plate 210 may be coated with the first active material layer 211.

Since the positive electrode plate 210 functions as a positive electrode, the first active material layer 211 may include a positive electrode active material.

The positive electrode active material may be a compound capable of reversible intercalation and deintercalation of lithium (lithiated intercalation compound). More specifically, at least one of a composite oxide of lithium and a metal selected from cobalt, manganese, nickel, iron, and a combination thereof may be used.

For example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM), or may include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material is used to provide conductivity to the first active material layer 211, and any material that does not cause chemical change and is electronically conductive may be used.

Examples of the positive electrode conductive material may include a carbon-based material such as natural graphite, artificial graphite, carbon black, acetylene black, ketjen black, carbon fiber, carbon nanofiber, and carbon nanotubes, a metal-based material in the form of a metal powder or metal fiber containing copper, nickel, aluminum, silver, or the like, a conductive polymer such as a polyphenylene derivative, and a mixture thereof.

The first active material layer 211 may further include a positive electrode binder.

The positive electrode binder serves to attach particles constituting the positive electrode active material to each other well and also to attach the positive electrode active material to the positive electrode plate 210 well.

Examples of the positive electrode binder may include a non-aqueous binder, an aqueous binder, a dry binder, and a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. Na, K, or Li may be used as the alkali metal.

The dry binder is a polymer material capable of fiberization, and may be, for example, polytetrafluoroethylene, polyvinylidene fluoride, a polyvinylidene fluoride-hexafluoropropylene copolymer, polyethylene oxide, or a combination thereof.

The positive electrode plate 210 may include the first uncoated portion 212 that is not coated with the first active material layer 211.

The first uncoated portion 212 may be disposed on both side regions of the positive electrode plate 210 disposed to face the opening 150 inside the case 100. However, the first uncoated portion 212 may be formed across the entire edge region of the positive electrode plate 210.

The negative electrode plate 220 may function as a negative electrode of the electrode assembly 200.

The negative electrode plate 220 may be formed in the form of a foil including a metal material such as copper, a copper alloy, nickel or a nickel alloy.

The negative electrode plate 220 may vary in type, size, or shape, as long as the negative electrode plate 220 is conductive and does not cause chemical changes in the secondary battery 20.

The cross-sectional shape of the negative electrode plate 220 may be designed to have any of various shapes other than the rectangle illustrated in FIG. 4.

A plurality of negative electrode plates 220 may be provided. The plurality of negative electrode plates 220 may be arranged in a direction parallel to the first direction, that is, in the first direction or in the direction opposite to the first direction (e.g., the negative X-axis), between the front surface 120 and the rear surface 130 of the case 100.

The plurality of positive electrode plates 210 and negative electrode plates 220 may be disposed alternately in the direction parallel to the first direction. The positive electrode plates 210 and negative electrode plates 220 may be disposed to be spaced apart from each other in the direction parallel to the first direction.

The negative electrode plate 220 may be disposed to face the positive electrode plate 210 in the direction parallel to the first direction.

The negative electrode plate 220 may include a second active material layer 221 and a second uncoated portion 222.

The second active material layer 221 may be provided in a form in which at least a portion of the negative electrode plate 220 is coated with the second active material layer 221. Both surfaces of the negative electrode plate 220 may be coated with the second active material layer 221, or only one surface of the negative electrode plate 220 may be coated with the second active material layer 221.

Since the negative electrode plate 220 functions as a negative electrode, the second active material layer 221 may include a negative electrode active material.

The negative electrode active material may be a material that reversibly intercalates/deintercalates lithium ions, lithium metal, an alloy of lithium and a metal, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate-shaped, flake-shaped, and spherical-shaped or fiber-shaped natural graphite or artificial graphite. Examples of the amorphous carbon may include soft carbon or hard carbon, mesophase pitch carbide, calcined coke, and the like.

The alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0<x<2), a Si-Q alloy (where, Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO2, a Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the silicon-carbon composite may include a secondary particle (core) in which silicon primary particles are aggregated and an amorphous carbon coating layer (shell) located on the surface of the secondary particle.

The amorphous carbon may also be located between the silicon primary particles, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any material that does not cause a chemical change in the battery and is electronically conductive may be used.

Examples of the negative electrode conductive material may include a carbon-based material such as natural graphite, artificial graphite, carbon black, acetylene black, ketjen black, carbon fiber, carbon nanofiber, carbon nanotubes, and the like, a metal-based material in the form of a metal powder or metal fiber including copper, nickel, aluminum, silver, and the like, a conductive polymer such as a polyphenylene derivative, and a mixture thereof.

The negative electrode binder serves to adhere particles constituting the negative electrode active material to each other well, and to adhere the negative electrode active material to the negative electrode plate 220 well.

Examples of the negative electrode binder may include a non-aqueous binder, an aqueous binder, a dry binder, and a combination thereof.

The non-aqueous binder may include polyvinyl chloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. Na, K, or Li may be used as the alkali metal.

The dry binder is a polymer material capable of fiberization, and may be, for example, polytetrafluoroethylene, polyvinylidene fluoride, a polyvinylidene fluoride-hexafluoropropylene copolymer, polyethylene oxide, or a combination thereof.

The negative electrode plate 220 may include the second uncoated portion 222 on which the second active material layer 221 is not applied.

The second uncoated portion 222 may be disposed on both sides of the negative electrode plate 220 disposed to face the opening 150 inside the case 100. However, the second uncoated portion 222 may be formed across the entire edge region of the negative electrode plate 220.

The separator 230 may be disposed between the positive electrode plate 210 and the negative electrode plate 220. The separator 230 may function to prevent a short circuit between the positive electrode plate 210 and the negative electrode plate 220 while allowing the movement of lithium ions between the positive electrode plate 210 and the negative electrode plate 220.

The separator 230 may be disposed to cover the entire surface region of the electrode assembly 200. Accordingly, the separator 230 may prevent the positive electrode plate 210 and the negative electrode plate 220 from being directly exposed to the outside of the electrode assembly 200.

The separator 230 may be made of polyethylene, polypropylene, polyvinylidene fluoride, or a multilayer film of two or more layers thereof, and may be made of a mixed multilayer film, such as a polyethylene/polypropylene two-layered separator, a polyethylene/polypropylene/polyethylene three-layered separator, or a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, Teflon, and polytetrafluoroethylene, or a copolymer or a mixture of two or more thereof.

The organic material may include a polyvinylidene fluoride-based polymer or a (meth)acrylic-based polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, or a combination thereof, but the present disclosure is not limited thereto.

The organic and inorganic materials may be mixed in one coating layer or may be in a form in which a coating layer including an organic material and a coating layer including an inorganic material are stacked.

The positive electrode tab 240 may be connected to the positive electrode plate 210. The positive electrode tab 240 may function as a component that provides an electrical connection between the positive electrode plate 210 and a connection member 600 described below.

A plurality of positive electrode tabs 240 may be provided. The positive electrode tabs 240 may extend from different positive electrode plates 210 in the second direction. The plurality of positive electrode tabs 240 may be stacked in the direction parallel to the first direction.

The negative electrode tab 250 may be connected to the negative electrode plate 220. The negative electrode tab 250 may function as a component that provides an electrical connection between the negative electrode plate 220 and the connection member 600.

A plurality of negative electrode tabs 250 may be provided. The negative electrode tabs 250 may extend from different negative electrode plates 220 in a direction opposite to the second direction. The plurality of negative electrode tabs 250 may be stacked in the direction parallel to the first direction.

The positive electrode tab 240 and the negative electrode tab 250 of the electrode assembly 200 according to the present embodiment may be disposed to face the opening 150 of the case 100.

The case according to the present embodiment may further include a vent hole 160 and a vent 170.

The vent hole 160 may be formed in the form of a hole passing through the ceiling 140 of the case 100 in a direction parallel to the third direction.

The vent hole 160 may function as a component that provides a path for flames, gas, smoke, etc. formed inside the case 100 so that the flames, gas, smoke, etc. are discharged to the outside of the case 100 during thermal runaway of the secondary battery 20 due to overcurrent, etc. A cross-sectional shape of vent hole 160 may be designed to have any of various shapes such as an oval, a circle, and a polygon.

The vent 170 is mounted in the vent hole 160 and may be opened and closed in response to changes in internal pressure of the case 100. The vent 170 may close the vent hole 160 during normal operation of the secondary battery 20 to prevent electrolyte, etc. inside the case 100 from leaking out of the case 100 or moisture, foreign substances, etc. from entering the case 100.

The vent 170 may open the vent hole 160 in the case of thermal runaway of the secondary battery 20 to allow flames, gas, smoke, etc. formed inside the case 100 to be discharged to the outside of the case 100.

The vent 170 may be formed to have substantially a plate shape. The vent 170 may be fixed to the ceiling 140 of the case 100 by any of various types of coupling methods such as welding, bolting, and fitting.

The cap assembly 300 according to the present embodiment may be coupled to the case 100 and may seal the case 100. The cap assembly 300 may be disposed to face the electrode assembly 200 in the direction parallel to the second direction.

The cap assembly 300 may include a cap plate 310 and a terminal 320.

The cap plate 310 forms the approximate exterior of the cap assembly 300 and may support the terminal 320 as a whole.

The cap plate 310 may be formed to have a flat shape. The cap plate 310 may be disposed in the opening 150 of the case 100. The cap plate 310 may be disposed to face the electrode assembly 200 in the direction parallel to the second direction.

The cap plate 310 may be disposed to be spaced a set distance from the electrode assembly 200. The cap plate 310 may be coupled to the case 100 by any of various types of coupling methods such as welding, bolting, and fitting.

The terminal 320 may protrude outward from the cap plate 310. The terminal 320 may be electrically connected to the electrode assembly 200 through the connection member 600.

The terminal 320 may be inserted into the cap plate 310. An upper end of the terminal 320 may protrude from the cap plate 310 in the direction parallel to the second direction.

In FIG. 3, an example in which the terminal 320 has a quadrangular cross-sectional shape is illustrated, but a cross-sectional shape of terminal 320 may be designed to have any of various shapes such as circle, an oval, and a polygon. The terminal 320 may be formed of an electrically conductive material such as aluminum, nickel, or copper.

The cap assembly 300 may further include an electrolyte inlet 330 which is formed to pass through the cap plate 310 and in which a sealing plug may be installed.

The insulator 400 according to the present embodiment may be disposed between the cap assembly 300 and the electrode assembly 200. The insulator 400 may be disposed between the cap plate 310 and the electrode assembly 200.

The insulator may insulate the cap plate 310 from the electrode assembly 200 by preventing the cap plate 310 from being in direct contact with the electrode assembly 200.

The insulator 400 may fix a position of the electrode assembly 200 inside the case 100. The insulator 400 may prevent damage to the electrode assembly 200 when the cap plate 310 is deformed toward the inside of the case 100 due to external impact or the like.

The insulator 400 may be disposed inside the case 100 to face the electrode assembly 200 in the direction parallel to the second direction. The electrode assembly 200, the insulator 400, and the cap plate 310 may be disposed sequentially in the direction parallel to the second direction.

The insulator 400 may be in contact with both sides of the electrode assembly 200 from which the positive electrode tab 240 and the negative electrode tab 250 extend, respectively. The insulator 400 may be formed of an insulating material such as polyethylene (PE), polypropylene (PP), polyethylene terephthalate (PET) rubber, etc.

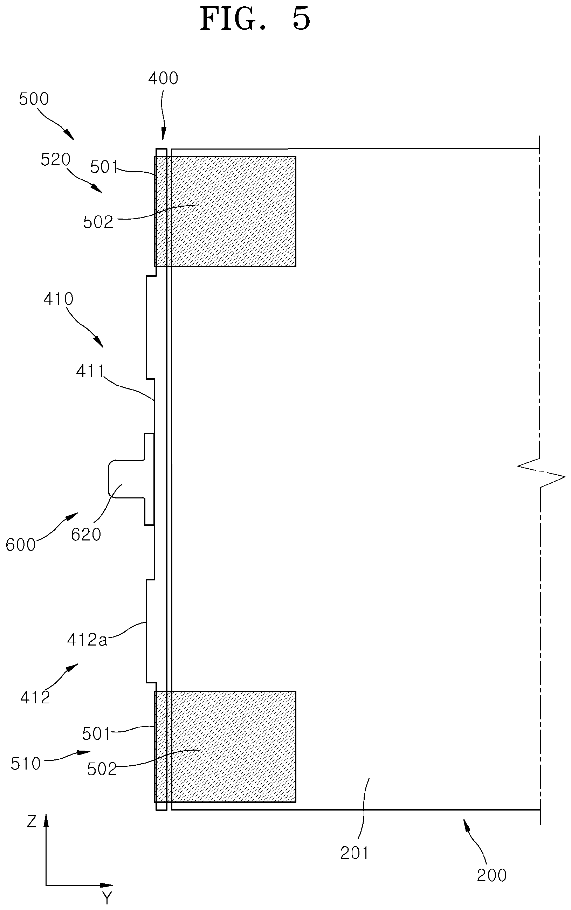

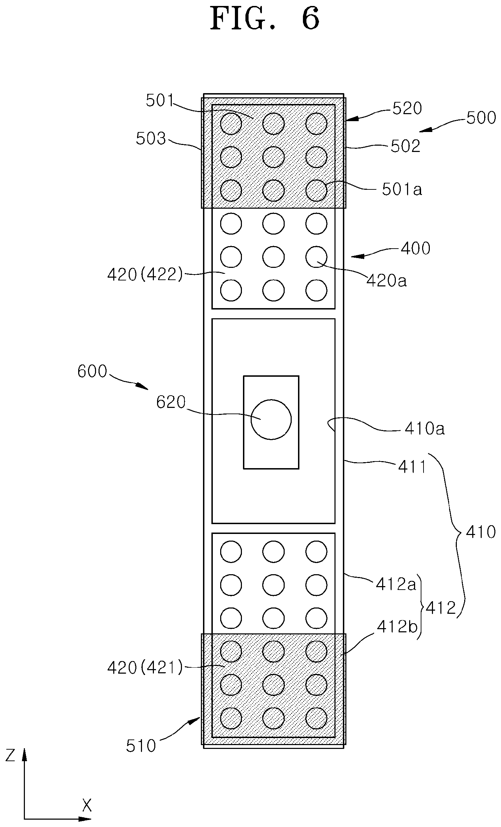

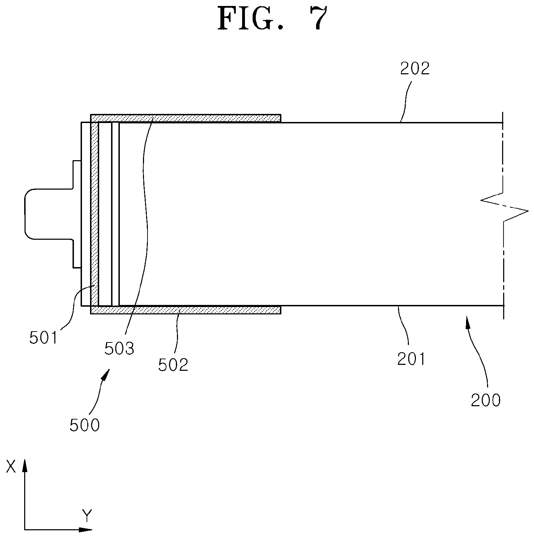

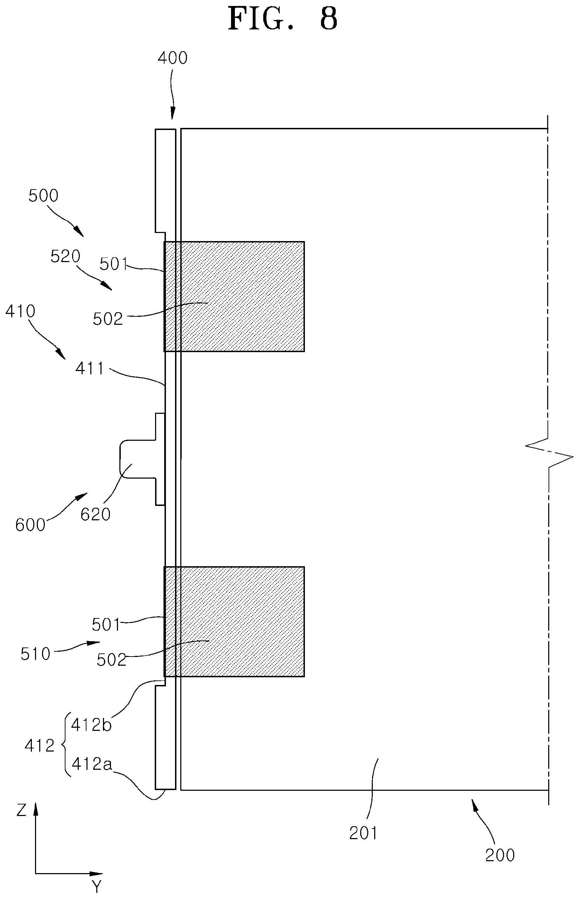

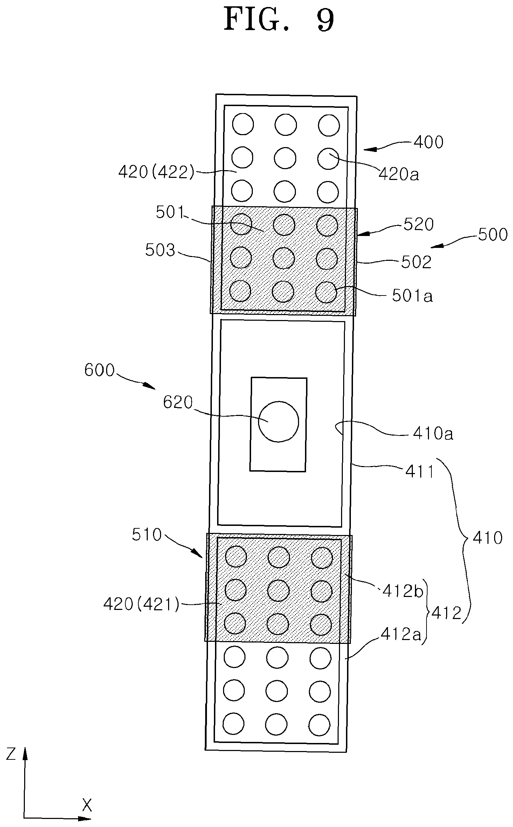

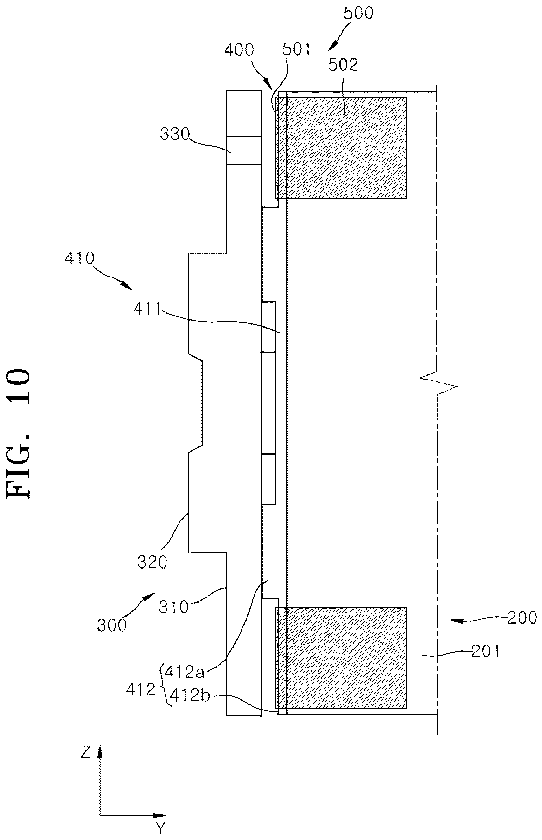

FIG. 5 is a view of a first side of a secondary battery according to a first embodiment of the present disclosure in the first direction, FIG. 6 is a view of the secondary battery according to the first embodiment of the present disclosure in the second direction, FIG. 7 is a view of the secondary battery according to the first embodiment of the present disclosure in the third direction, FIG. 8 is a view of the first side of the secondary battery according to the first embodiment of the present disclosure in the first direction, FIG. 9 is a view of the secondary battery according to the first embodiment of the present disclosure in the direction opposite to the second direction, and FIG. 10 is a view of the first side of the secondary battery according to the first embodiment of the present disclosure in the first direction.

Referring to FIGS. 3 and 5 to 10, the fixing member 500 according to the present embodiment may fix the insulator 400 to the electrode assembly 200. The fixing member 500 may include an adhesive tape in the form of a film of which a surface is coated with an adhesive and which has a set length.

The fixing member 500 may include a first portion 501, a second portion 502, and a third portion 503. The first portion 501, the second portion 502, and the third portion 503 may be formed integrally. The second portion 502, the first portion 501, and the third portion 503 may be sequentially disposed in a longitudinal direction of the fixing member 500.

The first portion 501 may be in contact with the insulator 400. The first portion 501 may be disposed in the direction parallel to the first direction. The first portion 501 may be attached to the insulator 400.

The first portion 501 may be provided with a through hole 501a (see FIG. 6). The through hole 501a may be formed to pass through the first portion 501 in a thickness direction. The through hole 501a may be formed in the direction parallel to the second direction.

A plurality of through holes 501a may be provided in the first portion 501. Any one of the plurality of through holes 501a may be disposed to face the electrolyte inlet 330 formed in the cap plate 310. That is, the through hole 501a and the electrolyte inlet 330 may communicate with each other.

The second portion 502 may extend from the first portion 501. The second portion 502 may extend from one side end of the first portion 501 in the second direction or in the direction opposite to the second direction.

The second portion 502 may be in contact with a first surface 201 of the electrode assembly 200. The second portion 502 may be disposed in the direction parallel to the second direction. The second portion 502 may be disposed in the second direction or the direction opposite to the second direction. The second portion 502 may be attached to the first surface 201 of the electrode assembly 200.

The third portion 503 may extend from the first portion 501. The third portion 503 may extend from the other side end of the first portion 501 in the second direction or in the direction opposite to the second direction.

The second portion 502 and the third portion 503 may be spaced apart from each other and extend from the first portion 501 in the same direction.

The third portion 503 may be in contact with a second surface 202 of the electrode assembly 200, which is disposed opposite to the first surface 201 of the electrode assembly 200. The first surface 201 and the second surface 202 may be disposed to be spaced apart from each other in the first direction of the electrode assembly 200.

The third portion 503 may be disposed in the direction parallel to the second direction. The third portion 503 may be disposed in the second direction or the direction opposite to the second direction. The second portion 502 and the third portion 503 may be disposed in the same direction. The second portion 502 and the third portion 503 may be disposed parallel to each other. The third portion 503 may be attached to the second surface 202 of the electrode assembly 200.

The fixing member 500 according to the present embodiment may include a first fixing member 510 and a second fixing member 520. The first fixing member 510 and the second fixing member 520 may be spaced apart from each other in the direction parallel to the third direction.

The second fixing member 520 may be disposed to be spaced apart from the first fixing member 510 in the third direction, and the first fixing member 510 may be disposed to be spaced apart from the second fixing member 520 in a direction opposite to the third direction.

The insulator 400 according to the present embodiment may include a frame 410 and a perforated plate 420 (see FIG. 6).

The frame 410 forms the overall exterior of the insulator 400 and may support the perforated plate 420. The frame 410 may be provided with an opening 410a. The opening 410a may be formed for the connection member 600 to pass through the frame 410 in the thickness direction.

The opening 410a may be formed in the direction parallel to the second direction. The opening 410a may function as a passage through which the cap assembly 300 and the connection member 600 are connected.

The perforated plate 420 may be provided in the frame 410 and formed integrally with the frame 410. The perforated plate 420 may cover a portion of the opening 410a formed in the frame 410.

The perforated plate 420 may be provided with a plurality of perforations 420a. The perforation 420a may be formed to pass through the perforated plate 420 in the thickness direction. The perforation 420a may be formed in the direction parallel to the second direction.

The perforated plate 420 may be disposed to face the first portion 501 of the fixing member 500. The first portion 501 may cover a portion of the perforated plate 420.

Any one of the plurality of perforations 420a formed in the perforated plate 420 may be disposed to face any one of the through holes 501a formed in the first portion 501. That is, the perforation 420a and the through hole 501a may communicate with each other. As a result, the electrolyte inlet 330 formed in the cap plate 310 and the perforation 420a formed in the perforated plate 420 may communicate with each other.

The electrolyte may be smoothly injected into the case 100 in which the electrode assembly 200 is accommodated through the through hole 501a formed in the first portion 501 of the fixing member 500, and an overflow may be prevented when the electrolyte is injected.

The perforated plate 420 may include a first perforated plate 421 and a second perforated plate 422.

The first perforated plate 421 and the second perforated plate 422 may be disposed to be spaced apart from each other in the direction parallel to the third direction.

The second perforated plate 422 may be disposed to be spaced apart from the first perforated plate 421 in the third direction, and the first perforated plate 421 may be disposed to be spaced apart from the second perforated plate 422 in the direction opposite to the third direction.

The first fixing member 510 according to the embodiment may cover the first perforated plate 421. The first portion 501 of the first fixing member 510 may be disposed to face the first perforated plate 421. The first portion 501 may cover the first perforated plate 421.

The second fixing member 520 may cover the second perforated plate 422. The first portion 501 of the second fixing member 520 may be disposed to face the second perforated plate 422. The first portion 501 may cover the second perforated plate.

The frame 410 according to the present embodiment may include a center frame 411 and a sub-frame 412.

The center frame 411 is disposed in a central portion of the frame 410 and may be provided with the opening 410a.

The sub-frame 412 may extend from the center frame 411 and may be provided with the perforated plate 420. The sub-frame 412 may extend from the center frame 411 in each of the third direction and the direction opposite to the third direction based on the center frame 411. The sub-frame 412 may be disposed on each side of the center frame 411.

The sub-frame 412 according to the present embodiment may include a first sub-frame 412a and a second sub-frame 412b.

The second sub-frame 412b parallel to the second direction may be formed to have a lower height than the first sub-frame 412a parallel to the second direction.

The first sub-frame 412a may be disposed relatively closer to the center frame 411 than the second sub-frame 412b.

The second sub-frame 412b according to the present embodiment may be disposed relatively closer to the center frame 411 than the first sub-frame 412a.

The fixing member 500 according to the present embodiment may be in contact with the second sub-frame 412b. The first portion 501 of the fixing member 500 may be in contact with the second sub-frame 412b and attached to the second sub-frame 412b.

Since the first portion 501 of the fixing member 500 is attached to the second sub-frame 412b, a height of the insulator 400 parallel to the second direction may be prevented from increasing, and a fixing force of the fixing member 500 may be secured.

The second sub-frame 412b according to the present embodiment may be spaced apart from the cap assembly 300. The second sub-frame 412b and the cap plate 310 of the cap assembly 300 may be disposed to be spaced apart from each other. Due to a gap formed between the cap plate 310 and the second sub-frame, the influence of heat at a welded portion may be avoided when welding the cap assembly 300 to the case 100.

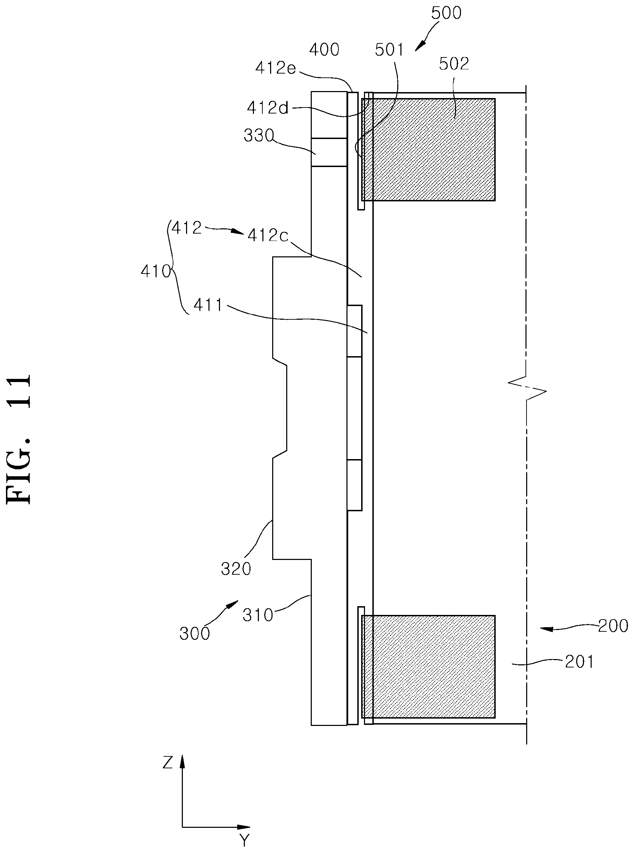

FIG. 11 is a view of a first side of a secondary battery according to a second embodiment of the present disclosure in the first direction.

Referring to FIGS. 3 and 11, the sub-frame 412 according to the present embodiment may include a sub-frame body 412c, a first sub-frame extension 412d, and a second sub-frame extension 412e.

The sub-frame body 412c may extend from the center frame 411. The sub-frame body 412c may extend from the center frame 411 in each of the third direction and in the direction opposite to the third direction based on the center frame 411. The sub-frame body 412c may be disposed on each side of the center frame 411.

The first sub-frame extension 412d may extend from the sub-frame body 412c. The first sub-frame extension 412d may extend from the sub-frame body 412c in each of the third direction and the direction opposite to the third direction.

The second sub-frame extension 412e may extend from the sub-frame body 412c. The second sub-frame extension 412e may extend from the sub-frame body 412c in each of the third direction and the direction opposite to the third direction.

The second sub-frame extension 412e may be disposed to be spaced apart from the first sub-frame extension 412d in the direction parallel to the second direction. The first sub-frame extension 412d and the second sub-frame extension 412e may be disposed in the same direction. The first sub-frame extension 412d and the second sub-frame extension 412e may be disposed parallel to each other.

The first sub-frame extension 412d may be disposed relatively closer to the electrode assembly 200 than the second sub-frame extension 412e, and the second sub-frame extension 412e may be positioned relatively closer to the cap assembly 300 than the first sub-frame extension 412d.

The second sub-frame extension 412e may be in contact with the cap assembly 300. The second sub-frame extension 412e may be in contact with the cap plate 310 of the cap assembly 300.

The fixing member 500 according to the present embodiment may be in contact with the first sub-frame extension 412d. The first portion 501 of the fixing member 500 may pass between the first sub-frame extension 412d and the second sub-frame extension 412e.

The first portion 501 may pass between the first sub-frame extension 412d and the second sub-frame extension 412e in the direction parallel to the first direction and may be in contact with the first sub-frame extension 412d. The first portion 501 may be attached to the first sub-frame extension 412d.

Since the first portion 501 of the fixing member 500 is attached to the first sub-frame extension 412d, the height of the insulator 400 parallel to the second direction may be prevented from increasing, and the fixing force of the fixing member 500 may be secured.

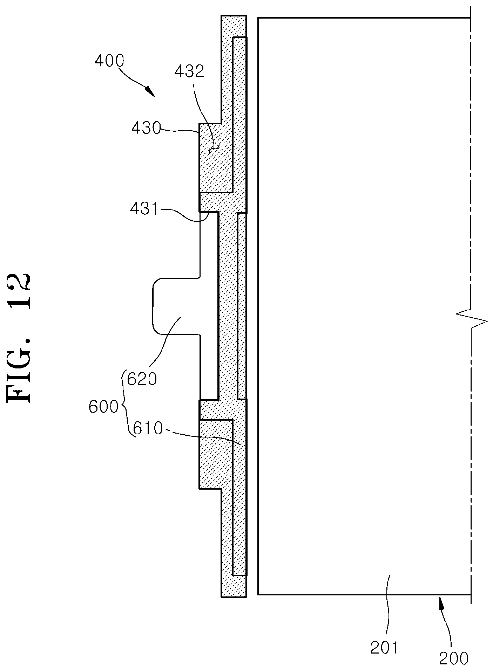

FIG. 12 is a view of a first side of a secondary battery according to a third embodiment of the present disclosure in the first direction.

Referring to FIGS. 3 and 12, the secondary battery 20 according to the embodiment of the present disclosure may further include the connection member 600. The connection member 600 may be disposed between the electrode assembly 200 and the cap assembly 300. The connection member 600 may be connected to the electrode assembly 200 and the cap assembly 300. The connection member 600 may include a current collector plate 610 and a current collector 620.

The current collector plate 610 forms one side exterior of the connection member 600 and may be formed in a substantially flat plate shape. The current collector plate 610 may be in contact with the electrode assembly 200. The current collector plate 610 may be connected to the electrode assembly 200.

The current collector 620 may be formed of a conductive material, such as aluminum, copper, or nickel. The current collector 620 may be integrally provided with the current collector plate 610. The current collector 620 may be disposed between the electrode assembly 200 and the cap plate 310. The current collector 620 may be in contact with the cap assembly 300. The current collector 620 may be electrically connected to the terminal 320.

The insulator 400 according to the present embodiment may include an insulator body 430, a through hole 431, and a receiving groove portion 432.

The insulator body 430 forms the overall exterior of the insulator 400 and may be disposed to face the electrode assembly 200.

The through hole 431 may be formed to pass through the insulator body 430. The through hole 431 is disposed in a central portion of the insulator body 430 and may be formed to pass through the insulator body 430 in the thickness direction.

The through hole 431 may be formed to pass through the insulator body 430 in the direction parallel to the second direction. The current collector 620 may pass through the through hole 431, and the current collector 620 may be exposed through the through hole 431.

The receiving groove portion 432 may be formed by recessing the insulator body 430. The receiving groove portion 432 may be disposed to face the electrode assembly 200. The current collector plate 610 may be accommodated inside the receiving groove portion 432, and the current collector plate 610 may be fixed to the insulator body 430. Accordingly, the connection member 600 may be prevented from warping.

According to one or more embodiments of the present disclosure, a first portion of a fixing member is disposed parallel to a first direction and attached to an insulator, a second portion of the fixing member, which extends from the first portion and is disposed parallel to a second direction, is attached to a first surface of an electrode assembly, and a third portion of the fixing member, which extends from the first portion and is disposed in the direction parallel to the second direction, is attached to the first surface of the electrode assembly, thereby firmly fixing the insulator to the electrode assembly and preventing the connection member from warping.

## Claims

1. A secondary battery (20), comprising:
a case (100);
an electrode assembly (200) accommodated in the case (100);
a cap assembly (300) coupled to the case (100) to seal the case (100);
an insulator (400) between the electrode assembly (200) and the cap assembly (300); and
a fixing member (500) fixing the insulator (400) to the electrode assembly (200),
wherein the fixing member (500) is in contact with the insulator (400), and wherein a first surface (201) of the electrode assembly (200) and a second surface (202) of the electrode assembly (200) are opposite each other.

2. The secondary battery (20) as claimed in claim 1, wherein the fixing member (500) includes:
a first portion (501) in contact with the insulator (400);
a second portion (502) extending from the first portion (501), the second portion (502) being in contact with the first surface (201); and
a third portion (503) extending from the first portion (501), the third portion (503) being in contact with the second surface (202).

3. The secondary battery (20) as claimed in claim 2, wherein the first portion (501) is parallel to a first direction, and the second portion (502) and the third portion (503) are parallel to a second direction intersecting the first direction.

4. The secondary battery (20) as claimed in claim 3, wherein the fixing member (500) includes:
a first fixing member (510); and
a second fixing member (520) spaced apart from the first fixing member (510) in a direction parallel to a third direction intersecting the first direction and the second direction.

5. The secondary battery (20) as claimed in claim 4, wherein the insulator (400) includes:
a frame (410); and
a perforated plate (420) covering a portion of an opening (410a) in the frame (410), the perforated plate (420) facing the first portion (501).

6. The secondary battery (20) as claimed in claim 5, wherein the first portion (501) includes a through hole (501a).

7. The secondary battery (20) as claimed in claim 5, wherein the frame (410) includes:
a center frame (411) having the opening (410a); and
a sub-frame (412) extending from the center frame (411), the sub-frame (412) having the perforated plate (420).

8. The secondary battery (20) as claimed in claim 7, wherein the sub-frame (412) includes:
a first sub-frame (412a); and
a second sub-frame (412b) having a lower height than the first sub-frame (412a) parallel to the second direction.

9. The secondary battery (20) as claimed in claim 7, wherein the sub-frame (412) includes:
a sub-frame body (412c);
a first sub-frame extension (412d) extending from the sub-frame body (412c); and
a second sub-frame extension (412e) extending from the sub-frame body (412c), the second sub-frame extension (412e) being spaced apart from the first sub-frame extension (412d) in a direction parallel to the second direction.

10. The secondary battery (20) as claimed in claim 9, wherein the first portion (501) is between the first sub-frame extension (412d) and the second sub-frame extension (412e), the first portion (501) being in contact with the first sub-frame extension (412d).

11. The secondary battery (20) as claimed in claim 5, wherein the perforated plate (420) includes:
a first perforated plate (421); and
a second perforated plate (422) spaced apart from the first perforated plate (421) in a direction parallel to the third direction.

12. The secondary battery (20) as claimed in any one of the preceding claims, further comprising a connection member (600) between the electrode assembly (200) and the cap assembly (300), the connection member (600) being connected to the electrode assembly (200) and the cap assembly (300).

13. The secondary battery (20) as claimed in claim 12, wherein the connection member (600) includes:
a current collector plate (610) in contact with the electrode assembly (200); and
a current collector (620) in contact with the cap assembly (300).

14. The secondary battery (20) as claimed in any one of the preceding claims,
wherein the fixing member (500) includes an adhesive tape.

15. A battery pack, comprising:
a housing (10); and
a plurality of secondary batteries as defined in any one of the preceding claims disposed inside the housing (10).
